# EUROPÄISCHE PATENTSCHRIFT

(11) **EP 2 148 107 B1**
(45) Veröffentlichungstag und Bekanntmachung des Hinweises auf die Patenterteilung: **25.08.2010**
(21) Anmeldenummer: 08161178.2
(22) Anmeldetag: 25.07.2008
(51) Int. Cl.: F16D 13/64, B60K 6/48

(54) **Antriebseinheit für ein Hybridfahrzeug und Verfahren zu deren Montage**
Drive unit for a hybrid car and method for its fitting
Unité d'entraînement pour un véhicule hybride et son procédé de montage

(43) Veröffentlichungstag der Anmeldung: 27.01.2010
(73) Patentinhaber: ZF Friedrichshafen AG, 88038 Friedrichshafen (DE)
(72) Erfinder: Kleuker, Christoph, 97422 Schweinfurt (DE)

(56) Entgegenhaltungen:
- EP-A- 1 914 433
- EP-A- 1 920 964
- DE-B- 1 112 673
- US-A1- 2003 234 150

## Beschreibung

Die Erfindung betrifft eine Antriebseinheit gemäß dem Oberbegriff von Patentanspruch 1 sowie ein Verfahren zur Montage einer solchen Antriebseinheit gemäß Patentanspruch 14.

Eine gattungsgemäße Antriebseinheit ist bereits mit der DE 10 2006 053 660 A1 bekannt geworden. Diese umfasst in axialer Reihenfolge einen Verbrennungsmotor, eine elektrische Maschine, eine Reibungskupplung und einen Torsionsdämpfer, wobei mit der Kupplung die Abtriebswelle des Verbennungsmotors von den restlichen Baugruppen abgekoppelt werden kann.

Aufgrund der axial gestaffelten Anordnung liegt es nahe, den Zusammenbau der gesamten Antriebseinheit ebenso in deren Anordnungsreihenfolge vorzunehmen. Bei einem solchen Vorgehen wird zunächst die elektrische Maschine einschließlich der Betätigungsvorrichtung für die Reibungskupplung vormontiert und am Gehäuse des Verbrennungsmotors festgelegt. In einem weiteren Schritt wird die Kupplung montiert, wobei deren Anpressplattengehäuse mit dem Rotorträger der elektrischen Maschine und deren Reibbelagscheibe mit Reibbelägen über eine Kupplungsnabe mit der Kurbelwelle des Verbrennungsmotors drehfest verbunden wird. Danach kann der Torsionsdämpfer mit dessen Gehäuse am Anpressplattengehäuse der Reibungskupplung festgelegt werden.

Für einen Fahrzeughersteller ist dieses Montagekonzept sehr zeitaufwändig und kostenintensiv. Es ist auch bei der Montage des gesamten Fahrzeugantriebstranges wünschenswert, aus zwei oder mehreren Komponenten, beispielsweise in anderen Fertigungsstätten, vormontierte Baugruppen zu verwenden, womit der Montageaufwand zum Aufbau der Antriebseinheit deutlich reduziert werden kann und Kosten gespart werden.

Da bei der eingangs erläuterten Antriebseinheit die Reibbelagscheibe über weitere Elemente axial an der Kurbelwelle festgelegt ist, ist beim Zusammenbau der Antriebseinheit zur Gewährleistung einer Funktion der Kupplung insbesondere auf deren korrekte Axiallage zu achten. Im Unterschied dazu wird die Reibbelagscheibe bei einer konventionellen Reibungskupplung mittels einer radialverzahnten Kupplungsnabe axial verlagerbar auf der Getriebeeingangswelle geführt, wobei sich beim Schließen der Kupplung die Reibbelagscheibe mit deren Nabe selbsttätig justiert. Im vorliegenden Fall erfordert eine Einstellung der korrekten Axiallage der Reibbelagscheibe jedoch eine Freigangsprüfung, wozu zumindest die elektrische Maschine und die Kupplung mit dem Verbrennungsmotor vereinigt sein müssen. Dazu ist, sofern zumindest eine Demontage des Anpressplattengehäuses und gegebenenfalls auch des bereits montierten Torsionsdämpfers erforderlich, um diese Elemente bzw. Komponente nach Einstellung der Axiallage der Reibbelagscheibe erneut zu montieren.

Aufgabe der Erfindung ist es, eine kompakte und einfach zu montierende Antriebseinheit mit einem Verbrennungsmotor, einer Elektromaschine und einer Reibungskupplung bereitzustellen und ein einfaches und kostengünstiges Verfahren zu deren Montage anzugeben.

Die Aufgabe wird gemäß Anspruch 1 gelöst durch Antriebseinheit für ein Hybridfahrzeug, welche umfasst einen Verbrennungsmotor mit einer Kurbelwelle, eine Reibungskupplung mit einer mittels einer Betätigungsanordnung axial verlagerbaren Druckplatte, einer Anpressplatte und mit einer zwischen diesen positionierten und mit der Kurbelwelle drehfest verbundenen und axial zu dieser festgelegten Kupplungsscheibenanordnung. Die Antriebseinheit umfasst weiterhin eine zwischen dem Verbrennungsmotor und der Reibungskupplung angeordnete elektrische Maschine mit einem an einem Statorträger festgelegten Stator und einem Rotor. Diese Antriebsanordnung ist **dadurch gekennzeichnet, dass** die Reibungskupplung zur zumindest mittelbaren Verbindung der Kupplungsscheibenanordnung mit der Kurbelwelle eine Kupplungsnabe umfasst, welche außerhalb der radialen Erstreckung von Druck- und Anpressplatte lösbar mit der Kupplungsscheibenanordnung verbunden ist.

Es ist auf die angegebene Weise möglich, eine vormontierte Baueinheit aus der Elektromaschine und der Kupplung zu bilden und diese an einem Verbrennungsmotor festzulegen, wobei als weiteres Element lediglich die Kupplungsnabe noch eingefügt werden braucht. Es wird also durch die angegebene Aufspaltung der Kupplungsmitnehmeranordnung in eine Kupplungsscheibenanordnung und in eine lösbar mit dieser verbundenen Kupplungsnabe ein hoher Vorfertigungsgrad und gleichzeitig ein reduzierter Montageaufwand beim Zusammenbau mit dem Verbrennungsmotor erreicht. In Anspruch 14 ist ein Verfahren zur Montage einer solchen Antriebseinheit angegeben, wobei in einem Schritt die vormontierte Baueinheit gemäß einem der Patentansprüche 12, 13 mittels des Statorträgers am Verbrennungsmotor festgelegt wird und in einem weiteren Schritt die Montage der Kupplungsnabe erfolgt, wobei diese drehfest mit der Kurbelwelle oder mit dem Kurbelwellenadapter und mit der Kupplungsscheibenanordnung verbunden wird.

Vorteilhafte Weiterbildungen und Ausgestaltungen der Erfindung sind in den Unteransprüchen angegeben.

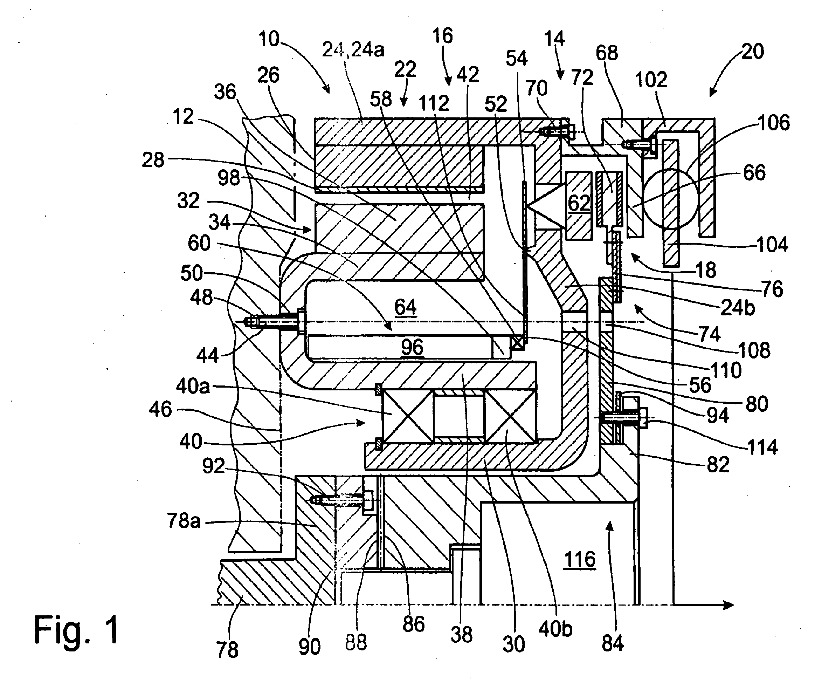

Nachfolgend wird die Erfindung beispielhaft unter Bezug auf die beigefügte Figur beschrieben.

Die Figur zeigt schematisch einen Axialschnitt einer Antriebseinheit 10 für ein Hybridfahrzeug aus einem Verbrennungsmotor 12 und einem Hybridmodul 14, welches eine Elektromaschine 16, eine als Reibungskupplung ausgeführte schaltbare Kupplung 18 und einen Torsionsdämpfer 20 umfasst.

Die Elektromaschine 16 ist im dargestellten Ausführungsbeispiel als permanenterregte Synchronmaschine in Außenläuferbauart ausgeführt und umfasst einen um eine Rotationsachse A umlaufenden topfförmigen Rotor 22 mit einem Rotorträger 24, der an dessen Innenumfangsfläche ein Rotorblechpaket 26 mit Permanentmagneten 28 trägt und der im radial inneren Bereich eine Rotorwelle 30 ausbildet oder mit dieser verbunden ist. Die Elektromaschine 16 umfasst weiter einen Stator 32 mit einem Statorträger 34, an dessen Außenumfangsfläche in an sich bekannter Art und Weise ein Statorblechpaket 36 mit einer zeichnerisch nicht dargestellten Statorwicklung angeordnet ist. Der Statorträger 34 kann weiterhin zur Abführung einer Verlustwärme der Elektromaschine 16 über eine Kühlanordnung, insbesondere über eine Fluid-Kühlanordnung verfügen, welche bevorzugt mit dem Kühlkreislauf des Verbrennungsmotors 12 ausgeführt ist.

Die Elektromaschine 16 kann alternativ zu dem dargestellten Außenläufer ebenso als Innenläufer ausgebildet sein und ebenso auch nach einem anderen elektrischen Funktionsprinzip arbeiten.

Die als Hohlwelle ausgeführte Rotorwelle 30 greift axial in die Zentralausnehmung eines rohrförmigen Lagerträgers 38 ein und ist dort radial und axial gelagert. In der Figur ist der Lagerträger 38 einteilig mit dem Statorträger 34 ausgeführt. Zur Aufnahme des Rotors 22 ist an dem Lagerträger 38 eine Lageranordnung 40, insbesondere umfassend ein zweireihiges oder zwei axial beabstandete Wälzlager 40a; 40b, vorgesehen, wodurch der Rotor 22 unter Ausbildung eines in Umfangsrichtung konstanten Radialspaltes 42 betriebssicher zum Stator 32 gelagert ist. Der Lagerträger 38 kann alternativ auch getrennt vom Statorträger 34 ausgeführt sein und unabhängig von diesem zumindest mittelbar am Verbrennungsmotor 12 festgelegt sein.

Die Elektromaschine 16 ist mittels mehrerer Schraubbolzen 44 an in einem Gehäuse 46 des Verbrennungsmotors 12 vorgegebenen Gewindebohrungen 48 festgelegt, wozu am Statorträger 34 mehrere dazu korrespondierende und am Umfang verteilte Durchgriffsöffnungen 50 ausgebildet sind.

Es ist in der Figur erkennbar, dass der Rotorträger 24 einen axialen und einen radialen Trageabschnitt 24a; 24b umfasst, wobei letzterer gleichzeitig einen Teil der Kupplung 18 ausbildet. Dazu ist an diesem mittels einer sich in Umfangsrichtung kreisförmig erstreckenden Schneide 52 eine als Ausrückorgan 54 dienende Membranfeder 54 verschwenkbar gelagert, welche mit deren radial innen befindlichen Membranfederzungen 56 über ein Ausrücklager 58 mit einer Betätigungsvorrichtung 60 bekannter Bauweise und mit dem radial äußeren Bereich mit einem schneidenförmigen Anlagebereich einer Druckplatte 62 in Wirkverbindung steht. Die bevorzugt als hydraulisch oder pneumatisch arbeitender Zentralausrücker ausgeführte Betätigungsvorrichtung 60 ist in einem sich radial zwischen dem Lagerträger 38 und dem Statorträger 34 erstreckenden ringförmigen Aufnahmeraum 64 angeordnet und kann sich bei der Betätigung der Reibungskupplung 18 an dem Lagerträger 38 abstützen. Die Reibungskupplung 18 umfasst weiter eine zu der Druckplatte 62 axial benachbarte Anpressplatte 66, welche hier in Baueinheit mit einem Kupplungsgehäuse 68 ausgeführt ist, das über eine lösbare Verbindung mit Schraubbolzen 70 oder alternativ mit z.B. einem Bajonettverschluss mit dem Rotorträger 24 verbunden ist. Bei Realisierung einer Schraubverbindung kann diese auch anstelle der dargestellten Axialverschraubung auch als Schrägverschraubung ausgebildet sein.

Axial zwischen der Druckplatte 62 und der Anpressplatte 66 ist eine Reibbelagscheibe 72 mit beidseitigen Reibbelägen positioniert, welche einen Bestandteil einer Kupplungsscheibenanordnung 74 bildet. Die Reibbelagscheibe 72 ist dazu bevorzugt durch Vernieten mit einem axialelastisch ausgestalteten, aus Federstahlblech gefertigten axialelastischen Bereich 76 verbunden, durch welchen die Reibbelagscheibe 72 gegenüber der Mitnehmerscheibe 80 beim Schließen der Kupplung 18 geringfügig axial verlagerbar und welcher sich beim Auftreten eines Versatzes der Kurbelwelle 78 des Verbrennungsmotors 12 und Rotorwelle 30 und einer daraus resultierenden Kraftwirkung elastisch verformen kann. Der axialelastische Bereich 76 ist wiederum ebenfalls bevorzugt durch Vernieten mit einer Mitnehmerscheibe 80 verbunden, welche in einem radial inneren Bereich lösbar mit einem Radialflansch 82 einer hohl ausgeführten Kupplungsnabe 84 verbunden ist. Sofern auf den Bereich 76 verzichtet wird, kann die Reibbelagscheibe 72 auch unmittelbar mit einer in Grenzen elastischen Mitnehmerscheibe 80 verbunden sein. An dem zur Kurbelwelle 78 gerichteten Ende ist die Kupplungsnabe 84 mit einer Stirnverzahnung 86 versehen, welche in eine dazu korrespondierende Verzahnung 88 eines mit der Kurbelwelle 78 verbunden und zur Distanzüberbrückung dienenden Kurbelwellenadapters 90 eingreift. Der Kurbelwellenadapter 90 ist durch mehrere auf einem gemeinsamen Teilkreis angeordnete Schraubbolzen 92 mit einem Radialflansch 78a der Kurbelwelle 78 verschraubt. Die Kupplungsnabe 84 wird zu dem Kurbelwellenadapter 90, durch einen zentral in der Kupplungsnabe 84 eingeführten und in dem Kurbelwellenadapter verschraubten Bolzen axial vorgespannt, so dass über die Stirnverzahnung 86; 88 eine sichere Drehmomentübertragung gewährleistet ist. Die Kupplungsscheibenanordnung 74 umfasst somit die Reibbelagscheibe 72, den axialelastischen Bereich 76 und die Mitnehmerscheibe 80. Zur Einstellung einer definierten Axiallage der Reibbelagscheibe 72 kann bei der Montage der Antriebseinheit 10 bei Bedarf axial zwischen der Kupplungsnabe 84, genauer deren Radialflansch 82 und der Mitnehmerscheibe 80 eine Distanzscheibe 94 mit einer in vorgegebenen Stufen wählbaren Dicke eingefügt werden.

Die Betätigungsvorrichtung 60 umfasst einen axial am Statorträger 34 bzw. dem Legerträger 38 festgelegtes Zylindergehäuse 96 und einen dazu in Richtung der Kupplung axial verlagerbaren Kolben 98 mit dem Ausrücklager 58, der beim Ausfahren die Membranfeder 54 um deren Auflagebereich 52 verschwenkt, die Druckplatte 92 entlastet und in Richtung des Verbrennungsmotors 12 verlagert und dadurch die Kupplung 18 öffnet. Die Reibbelagscheibe 72 dient somit bei geschlossener Kupplung 18 als Koppelelement zwischen der Kurbelwelle 78 einerseits und dem Rotor 22 und dem Torsionsdämpfer 20 andererseits.

An die Reibungskupplung 18 schließt sich in axialer Reihenfolge der Torsionsdämpfer 20 an, der in einer an sich bekannten Bauweise ausgeführt ist. Das Eingangsteil des Torsionsdämpfers 20 wird dabei von einem am Kupplungsgehäuse 68 durch mehrere Schraubbolzen 100 festgelegten Gehäuse 102 gebildet, so dass ein über dieses eingeleitete Drehmoment an eine als Nabenscheibe 104 ausgebildetes Ausgangsteil geleitet werden kann. Zur Schwingungsdämpfung sind mehrere, sich jeweils endseitig an dem Gehäuse 102 und der Nabenscheibe 104 abstützende und in Umfangsrichtung zwischen diesen eingespannte Federelement 106 vorgesehen, die auftretende Drehmomentstöße absorbieren können. Die Nabenscheibe 104 weist zur drehfesten Verbindung mit weiteren Komponenten der Antriebseinheit 10, z.B. mit einer weiteren Kupplung und mit einem Schaltgetriebe, eine Innenverzahnung 106 auf, deren Innendurchmesser etwas größer ist als der Hüllkreisdurchmesser der im Statorträger 34 bzw. dem Lagerträger 38 befindlichen Durchgriffsöffnungen 50 zur Festlegung des Hybridmoduls 14 am Verbrennungsmotor 12. Zur Durchführung der Schraubbolzen 44 sind dazu auch in der Mitnehmerscheibe 80, im Rotorträger 24 und in der Membranfeder 54 Durchgriffsöffnungen 108; 110; 112 vorgesehen. Die Anzahl dieser Durchgangsöffnungen an jedem der Elemente 80; 24; 54 ist jedoch gegenüber der Anzahl der zu montierenden Schraubbolzen 44 und damit der Anzahl der Durchgriffsöffnungen 50 im Statorträger 34 bzw. Lagerträger 38 kleiner.

Aus der bisherigen Beschreibung wird ersichtlich, dass ein mit einer solchen Antriebseinheit ausgestattetes Hybridfahrzeug je nach Anforderung rein verbrennungsmotorisch, rein elektromotorisch oder in einer gemischten Betriebsweise von beiden Aggregaten 12, 16 angetrieben werden kann. Zum Starten des Verbrennungsmotors 12 ist der Drehmomentfluss auch in der entgegengesetzten Richtung, also von der Elektromaschine 16 in Richtung Verbrennungsmotor 12 möglich.

Zur Montage des Hybridmoduls 14 werden beim Zusammenbau der Elektromaschine 16 gleichfalls die an dieser angeordneten Elemente der Reibungskupplung 18 und der Betätigungsvorrichtung 60 festgelegt. Das bedeutet, die Betätigungsvorrichtung 60 wird im Ringraum 64 des Stators 32 positioniert und die Membranfeder 54 wird auf der Innenseite und die Anpressplatte 62 auf der Außenseite des Rotors 22 festgelegt. In einem weiteren Schritt werden der Rotor 22 und der Stator 32 mittels der Lageranordnung 40 zueinander festgelegt, wobei das innere Ende 56 der Membranfeder 54 in Anlage an die Betätigungsvorrichtung 58; 60 gebracht wird. In einem weiteren Schritt wird das Kupplungsgehäuse 68 mit dem Rotorträger 24 verbunden, wobei die Reibbelagscheibe 72 mit der daran angeordneten Mitnehmerscheibe 80 zwischen Druck- 62 und Anpressplatte 66 eingeklemmt wird. Die Kupplungsnabe 84 und die bedarfsweise vorgesehen Distanzscheibe 94 werden hierbei noch nicht montiert.

In einem noch weiteren Schritt wird der komplette Torsionsdämpfer 20 an dem Kupplungsgehäuse 68 festgelegt.

Die erläuterte Montage stellt lediglich eine mögliche Montagevariante dar, die jedoch bezüglich deren Reihenfolge nicht zwingend ist. Zum Beispiel kann der Torsionsdämpfer 20 auch vor der Festlegung des Kupplungsgehäuses 68 am Rotorträger 24 mit dem Kupplungsgehäuse 68, der Kupplungsscheibe 72, dem axialelastischen Element 76 und der Mitnehmerscheibe 80 zu einer Untereinheit vereinigt werden.

Zur Montage der Antriebseinheit 10 wird das vormontierte Hybridmodul 14 am Verbrennungsmotor 12 festgelegt. Dazu werden die Schraubbolzen 44 innen durch die Torsionsdämpfernabenscheibe 104 und durch die Durchgangsöffnungen 108; 110; 112; 50 der Mitnehmerscheibe 80, des Rotorträgers 24, der Membranfeder 54 und teilweise des Statorträgers 34 hindurchgeführt und im Gehäuse 46 des Verbrennungsmotors 12 verschraubt. Da im beschriebenen Ausführungsbeispiel die Anzahl der Durchgangsöffnungen je Element geringer ist als die Anzahl der Montageöffnungen des Statorträgers 34, erfolgt die Verschraubung gruppenweise, wobei in einer ersten Drehstellung des Rotors 22, der damit drehfest verbundenen Membranfeder 54 und der Mitnehmerscheibe 80 zunächst eine erste Gruppe von Montageöffnungen zur Deckung kommt und die Verschraubung vorgenommen wird. Dann wird der Rotor 22 um einen vorbestimmten Winkelbetrag verdreht bis die Durchgangsöffnungen mit den verbleibenden, eine weitere Gruppe bildenden Montageöffnungen zur Deckung kommen und diese ebenfalls mit Schraubbolzen am Verbrennungsmotor 12 verschraubt werden können. Die Mitnehmerscheibe 80 kann zum Beispiel zur Verbindung mit dem Bereich 76 auch lediglich drei sich nach radial außen erstreckende Tragarme aufweisen, die jeweils zwischen sich entsprechende Ausnehmungen definieren. Aufgrund dieser Anordnung ergeben sich zum Durchgriff der Schraubbolzen relativ großflächige Durchgriffsöffnungen, so dass auf die Schaffung spezieller Montageöffnungen verzichtet werden kann. Zur zeitweisen Fixierung der gegenseitigen Drehlage von Stator 32, Rotor 22, Membranfeder 54 und ggf. der Mitnehmerscheibe 80 vor und während der Montage ist an den Bauteilen zumindest jeweils eine weitere in der Figur nicht dargestellte Öffnung zur Aufnahme eines Fixierelementes , z.B. eines Fixierstiftes vorgesehen.

In diesem Montagezustand wird die axiale Lage der Reibbelagscheibe 72 zum freien Ende des Kurbelwellenadapters 90 bestimmt und sofern diese von der Einbaulänge der Kupplungsnabe 84 abweicht, eine Distanzscheibe 94 passender Dicke ausgewählt, welche zwischen dem Radialflansch 82 der Kupplungsnabe 84 und der Mitnehmerscheibe 80 angeordnet wird. Die Verbindung von Kupplungsnabe 84 und Mitnehmerscheibe 80 erfolgt wiederum durch mehrere Schraubbolzen 114 oder durch mehrere in die Mitnehmerscheibe 80 einpressbare Stiftschrauben. In die Zentralausnehmung 116 der Kupplungsnabe 84 kann nachfolgend ein zeichnerisch nicht dargestelltes Pilotlager zur Lagerung einer Antriebstrangwelle, z.B. einer Zwischen- oder einer Getriebeeingangswelle, eingepresst werden. Selbstverständlich kann eine Distanzscheibe prinzipiell auch axial zwischen der Kurbelwelle 78 oder dem Kurbelwel-lenadapter 90und der Kupplungsnabe 84 eingefügt werden, um einen gewünschten Axialausgleich zu erzielen.

### Bezugszeichenliste

- 10: Antriebseinheit
- 12: Verbrennungsmotor
- 14: Hybridmodul
- 16: Elektromaschine
- 18: Kupplung
- 20: Torsionsdämpfer
- 22: Rotor
- 24: Rotorträger
- 26: Rotorblechpaket
- 28: Permanentmagneten
- 30: Rotorwelle
- 32: Stator
- 34: Statorträger
- 36: Statorblechpaket
- 38: Lagerträger
- 40: Lageranordnung
- 42: Radialspalt
- 44: Schraubbolzen
- 46: Verbrennungsmotorgehäuse
- 48: Gewindebohrung
- 50: Durchgriffsöffnung
- 52: Schneide
- 54: Ausrückorgan, Membranfeder
- 56: Membranfederzunge
- 58: Ausrücklager
- 60: Betätigungsvorrichtung
- 62: Druckplatte
- 64: ringförmiger Aufnahmeraum
- 66: Anpressplatte
- 68: Kupplungsgehäuse
- 70: Schraubbolzen
- 72: Kupplungsscheibe
- 74: Kupplungsscheibenanordnung
- 76: axialelastischer Bereich
- 78: Kurbelwelle
- 78a: Radialflansch
- 80: Mitnehmerscheibe
- 82: Radialflansch
- 84: Kupplungsnabe
- 86, 88: Stirnverzahnung
- 90: Kurbelwellenadapter
- 92: Schraubbolzen
- 94: Distanzscheibe
- 96: Zylindergehäuse
- 98: Kolben
- 100: Schraubbolzen
- 102: Gehäuse
- 104: Nabenscheibe
- 106: Federelement
- 108; 110; 112: Durchgriffsöffnung

## Patentansprüche

1. Antriebseinheit (10) für ein Hybridfahrzeug umfassend
- einen Verbrennungsmotor (12) mit einer Kurbelwelle (78),
- eine Reibungskupplung (18) mit einer mittels einer Betätigungsanordnung (96; 54; 58) axial verlagerbaren Druckplatte (62), einer Anpressplatte (66) und mit einer zwischen diesen positionierten und mit der Kurbelwelle (78) drehfest verbundenen und axial zu dieser festgelegten Kupplungsscheibenanordnung (74),
- eine zwischen dem Verbrennungsmotor (12) und der Reibungskupplung (18) angeordnete elektrische Maschine (16) mit einem an einem Statorträger (34) festgelegten Stator (32) und einem Rotor (22),
**dadurch gekennzeichnet,**
**dass** die Reibungskupplung (18) zur zumindest mittelbaren Verbindung der Kupplungsscheibenanordnung (74) mit der Kurbelwelle (78) eine Kupplungsnabe (84) umfasst, welche außerhalb der radialen Erstreckung von Druck- (62) und Anpressplatte (66) lösbar mit der Kupplungsscheibenanordnung (74) verbunden ist.

2. Antriebseinheit nach Patentanspruch 1,
**dadurch gekennzeichnet,**
**dass** die Kupplungsscheibenanordnung (74) eine mit der Kupplungsnabe (84) verbundene Mitnehmerscheibe (80) und eine mit dieser verbundene Reibbelagscheibe (72) aufweist.

3. Antriebseinheit nach Patentanspruch 1 oder 2,
**dadurch gekennzeichnet,**
**dass** in Wirkverbindung zwischen der Mitnehmerscheibe (80) und der Reibbelagscheibe (72) ein axialelastischer Bereich (76) vorgesehen ist.

4. Antriebseinheit nach einem der Patentansprüche 1-3,
**dadurch gekennzeichnet,**
**dass** die Kupplungsnabe (84) und die Kurbelwelle (78) oder ein drehfest mit dieser verbundener Kurbelwellenadapter (90) zur Herstellung einer gegenseitigen Drehmitnahmeverbindung eine Stirnverzahnung (86; 88) und lösbare axiale Verbindungsmittel aufweisen.

5. Antriebseinheit nach einem der vorhergehenden Patentansprüche,
**dadurch gekennzeichnet,**
**dass** die Reibungskupplung (18) ein in Baueinheit mit der Anpressplatte (66) ausgeführtes und mit dem Rotor (22) der elektrischen Maschine (16) verbundenes Kupplungsgehäuse (68) aufweist.

6. Antriebseinheit nach einem der vorhergehenden Patentansprüche,
**dadurch gekennzeichnet,**
**dass** die Antriebseinheit (10) einen Torsionsdämpfer (20) aufweist, dessen Eingangsteil durch ein mit dem Kupplungsgehäuse (68) verbundenes Gehäuse (102) und dessen Ausgangsteil durch eine Nabenscheibe (104) gebildet wird.

7. Antriebseinheit nach einem der vorhergehenden Patentansprüche,
**dadurch gekennzeichnet,**
**dass** der Rotor (22) der elektrischen Maschine (16) auf einem sich am Verbrennungsmotor (12) abstützenden Lagerträger (38) gelagert ist.

8. Antriebseinheit nach Patentanspruch 7,
**dadurch gekennzeichnet,**
**dass** der Lagerträger (38) in Baueinheit mit dem Statorträger (34) ausgeführt ist.

9. Antriebseinheit nach einem der vorhergehenden Patentansprüche,
**dadurch gekennzeichnet,**
**dass** die Reibungskupplung (18) eine innerhalb eines im Stator (82) ausgebildeten Ringraumes (64) angeordnete Betätigungsvorrichtung (96) zu deren Betätigung aufweist.

10. Antriebseinheit nach Anspruch 9,
**dadurch gekennzeichnet,**
**dass** der Rotor (22) einen Rotorträger (24) aufweist, an dessen einer Axialseite die Druckplatte (62) axial verlagerbar angeordnet und durch zumindest eine in dem Rotorträger (24) ausgebildete Durchgriffsöffnung von der anderen Axialseite aus mittels der Betätigungsvorrichtung (96) ansteuerbar ist.

11. Antriebseinheit nach Patentanspruch 10,
**dadurch gekennzeichnet,**
**dass** der Rotorträger (24) einen Auflageabschnitt (52) zur verschwenkbaren Lagerung eines Kupplungs-Ausrückorgans (54) aufweist, dessen Endabschnitte mit der Betätigungsvorrichtung (96) und mit der Druckplatte (62) zusammenwirken.

12. Antriebseinheit nach einem der vorhergehenden Patentansprüche,
**dadurch gekennzeichnet,**
**dass** die elektrische Maschine (16), die Reibungskupplung (18) und die Betätigungsanordnung (96; 54; 58) eine vormontierte Baueinheit zur gemeinsamen Montage an dem Verbrennungsmotor (12) bilden, wobei die Reibungskupplung (18) zumindest die Druckplatte (62), die Anpressplatte (66), das Kupplungsgehäuse (68) und die Reibbeisgscheibe (72) umfasst.

13. Antriebseinheit nach Patentanspruch 12,
**dadurch gekennzeichnet,**
**dass** die vormontierte Baueinheit den Torsionsdämpfer (20) umfasst.

14. Verfahren zur Montage einer Antriebseinheit, wobei in einem Schritt
- die vormontierte Baueinheit gemäß einem der Patentansprüche 12, 13 mittels des Statorträgers (34) am Verbrennungsmotor (12) festgelegt wird und in einem weiteren Schritt die
- Montage der Kupplungsnabe (84) erfolgt, wobei diese drehfest mit der Kurbelwelle (78) oder mit dem Kurbelwellenadapter (90) und mit der Kupplungsscheibenanordnung (74) verbunden wird.

15. Verfahren zur Montage einer Antriebseinheit gemäß Patentanspruch 14,
**dadurch gekennzeichnet,**
**dass** nach der Festlegung der vormontierte Einheit am Verbrennungsmotor (12) eine axiale Distanz der Kupplungsscheibenanordnung (74) zur Montageschnittestelle der Kurbelwelle (78) bzw. des Kurbelwellenadapters (90) ermittelt wird und die Kupplungsnabe (84) mit der Kurbelwelle (78) oder mit dem Kurbelwellenadapter (90) unter Einlagerung einer auf der Grundlage der vorgenannten axialen Distanz ausgewählten Distanzscheibe (94) mit der Kupplungsscheibenanordnung (74) verbunden wird.

## Claims

1. Drive unit (10) for a hybrid vehicle, comprising
- an internal combustion engine (12) having a crankshaft (78),
- a friction clutch (18) having a thrust plate (62) which can be moved axially by means of an actuating arrangement (96; 54; 58), having a pressure plate (66) and having a clutch disc arrangement (74) which is positioned between said thrust plate and pressure plate and which is rotationally fixedly connected to and fixed axially with respect to the crankshaft (78),
- an electric machine (16) which is arranged between the internal combustion engine (12) and the friction clutch (18) and has a stator (32), which is fixed to a stator carrier (34), and a rotor (22),
**characterized**
**in that** the friction clutch (18) comprises a clutch hub (84) for at least indirect connection of the clutch disc arrangement (74) to the crankshaft (78), which clutch hub (84) is releasably connected to the clutch disc arrangement (74) outside the radial extent of the thrust (62) and pressure plates (66).

2. Drive unit according to Patent Claim 1,
**characterized**
**in that** the clutch disc arrangement (74) has a driver disc (80) which is connected to the clutch hub (84), and a friction lining disc (72) which is connected to said driver disc (80).

3. Drive unit according to Patent Claim 1 or 2,
**characterized**
**in that** an axially elastic region (76) is provided in operative connection between the driver disc (80) and the friction lining disc (72).

4. Drive unit according to one of Patent Claims 1-3,
**characterized**
**in that** the clutch hub (84) and the crankshaft (78) or a crankshaft adapter (90) which is rotationally fixedly connected to said crankshaft (78) have a spur toothing (86; 88) and releasable axial connecting means for producing a rotationally driving connection with one another.

5. Drive unit according to one of the preceding patent claims,
**characterized**
**in that** the friction clutch (18) has a clutch housing (68) which is formed as a structural unit with the pressure plate (66) and which is connected to the rotor (22) of the electric machine (16).

6. Drive unit according to one of the preceding patent claims,
**characterized**
**in that** the drive unit (10) has a torsional damper (20), the input part of which is formed by a housing (102) connected to the clutch housing (68) and the output part of which is formed by a hub disc (104).

7. Drive unit according to one of the preceding patent claims,
**characterized**
**in that** the rotor (22) of the electric machine (16) is mounted on a bearing carrier (38) which is supported on the internal combustion engine (12).

8. Drive unit according to Patent Claim 7,
**characterized**
**in that** the bearing carrier (38) is formed as a structural unit with the stator carrier (34).

9. Drive unit according to one of the preceding patent claims,
**characterized**
**in that** the friction clutch (18) has, for the actuation thereof, an actuating device (96) arranged within an annular chamber (64) formed in the stator (32).

10. Drive unit according to Claim 9,
**characterized**
**in that** the rotor (22) has a rotor carrier (24), on one axial side of which the thrust plate (62) is arranged in an axially movable manner and can be actuated by means of the actuating device (96) from the other axial side through at least one passage opening formed in the rotor carrier (24).

11. Drive unit according to Patent Claim 10,
**characterized**
**in that** the rotor carrier (24) has a support section (52) for the pivotable mounting of a clutch release element (54), the end sections of which interact with the actuating device (96) and with the thrust plate (62).

12. Drive unit according to one of the preceding patent claims,
**characterized**
**in that** the electric machine (16), the friction clutch (18) and the actuating arrangement (96; 54;58) form a pre-assembled structural unit for joint assembly on the internal combustion engine (12), with the friction clutch (18) comprising at least the thrust plate (62), the pressure plate (66), the clutch housing (68) and the friction lining disc (72).

13. Drive unit according to Patent Claim 12,
**characterized**
**in that** the pre-assembled structural unit comprises the torsion damper (20).

14. Method for assembling a drive unit, wherein in one step
- the pre-assembled structural unit according to one of Patent Claims 12, 13 is fixed to the internal combustion engine (12) by means of the stator carrier (34), and in a further step
- the assembly of the clutch hub (84) takes place, with said clutch hub being rotationally fixedly connected to the crankshaft (78) or to the crankshaft adapter (90) and to the clutch disc arrangement (74).

15. Method for assembling a drive unit according to Patent Claim 14,
**characterized**
**in that**, after the fixing of the pre-assembled unit to the internal combustion engine (12), an axial distance from the clutch disc arrangement (74) to the assembly interface of the crankshaft (78) or of the crankshaft adapter (90) is determined, and the clutch hub (84) with the crankshaft (78) or with the crankshaft adapter (90) is connected to the clutch disc arrangement (74) with the interposition of a spacer disc (94) selected on the basis of the above-stated axial distance.

## Revendications

1. Unité d'entraînement (10) pour un véhicule hybride, comprenant :
- un moteur à combustion interne (12) avec un vilebrequin (78),
- un embrayage à friction (18) avec une plaque de pression (62) déplaçable axialement au moyen d'un agencement d'actionnement (96 ; 54 ; 58), une plaque de pressage (66) et un agencement de disque d'embrayage (74) positionné entre eux et connecté de manière solidaire en rotation au vilebrequin (78) et fixé axialement par rapport à ce dernier,
- un moteur électrique (16) disposé entre le moteur à combustion interne (12) et l'embrayage à friction (18), avec un stator (32) fixé sur un support de stator (34) et un rotor (22),
**caractérisée en ce que**
l'embrayage à friction (18), pour la connexion au moins indirecte de l'agencement de disque d'embrayage (74) au vilebrequin (78), comprend un moyeu d'embrayage (84), qui est connecté à l'agencement de disque d'embrayage (74) de manière desserrable en dehors de l'étendue radiale de la plaque de pression (62) et de la plaque de pressage (66).

2. Unité d'entraînement selon la revendication 1,
**caractérisée en ce que**
l'agencement de disque d'embrayage (74) présente un disque d'entraînement (80) connecté au moyeu d'embrayage (84) et un disque de garniture de friction (72) connecté à celui-ci.

3. Unité d'entraînement selon la revendication 1 ou 2,
**caractérisée en ce que**
l'on prévoit une région axialement élastique (76) en liaison fonctionnelle entre le disque d'entraînement (80) et le disque de garniture de friction (72).

4. Unité d'entraînement selon l'une quelconque des revendications 1 à 3,
**caractérisée en ce que**
le moyeu d'embrayage (84) et le vilebrequin (78) ou un adaptateur de vilebrequin (90) connecté de manière solidaire en rotation à celui-ci, présentent, pour la fabrication d'une connexion d'entraînement en rotation mutuelle, une denture frontale (86 ; 88) et des moyens de connexion axiaux desserrables.

5. Unité d'entraînement selon l'une quelconque des revendications précédentes,
**caractérisée en ce que**
l'embrayage à friction (18) présente un carter d'embrayage (68) réalisé dans une unité constructive avec la plaque de pressage (66) et connecté au rotor (22) du moteur électrique (16).

6. Unité d'entraînement selon l'une quelconque des revendications précédentes,
**caractérisée en ce que**
l'unité d'entraînement (10) présente un amortisseur de torsion (20) dont la partie d'entrée est formée par un boîtier (102) connecté au carter d'embrayage (68) et dont la partie de sortie est formée par un disque de moyeu (104).

7. Unité d'entraînement selon l'une quelconque des revendications précédentes,
**caractérisée en ce que**
le rotor (22) du moteur électrique (16) est monté sur un support de palier (38) s'appuyant sur le moteur à combustion interne (12).

8. Unité d'entraînement selon la revendication 7,
**caractérisée en ce que**
le support de palier (38) est réalisé dans une unité constructive avec le support de stator (34).

9. Unité d'entraînement selon l'une quelconque des revendications précédentes,
**caractérisée en ce que**
l'embrayage à friction (18) présente un dispositif d'actionnement (96) pour son actionnement, disposé à l'intérieur d'un espace annulaire (64) réalisé dans le stator (32).

10. Unité d'entraînement selon la revendication 9,
**caractérisée en ce que**
le rotor (22) présente un support de rotor (24), sur un côté axial duquel est disposée la plaque de pression (62), de manière déplaçable axialement, qui peut être commandée par au moins une ouverture d'engagement réalisée dans le support de rotor (24) depuis l'autre côté axial, au moyen du dispositif d'actionnement (96).

11. Unité d'entraînement selon la revendication 10,
**caractérisée en ce que**
le support de rotor (24) présente une portion d'appui (52) pour le support pivotant d'un organe de débrayage de l'embrayage (54), dont les portions d'extrémité coopèrent avec le dispositif d'actionnement (96) et avec la plaque de pression (62).

12. Unité d'entraînement selon l'une quelconque des revendications précédentes,
**caractérisée en ce que**
le moteur électrique (16), l'embrayage à friction (18) et l'agencement d'actionnement (96 ; 54 ; 58), forment une unité constructive prémontée, pour le montage commun sur le moteur à combustion interne (12), l'embrayage à friction (18) comprenant au moins la plaque de pression (62), la plaque de pressage (66), le carter d'embrayage (68) et le disque de garniture de friction (72).

13. Unité d'entraînement selon la revendication 12,
**caractérisée en ce que**
l'unité constructive prémontée comprend l'amortisseur de torsion (20).

14. Procédé de montage d'une unité d'entraînement, dans lequel, dans une étape,
- l'unité constructive prémontée selon l'une quelconque des revendications 12, 13, est fixée au moyen du support de stator (34) sur le moteur à combustion interne (12) et
dans une autre étape,
- le montage du moyeu d'embrayage (84) a lieu, celui-ci étant connecté de manière solidaire en rotation au vilebrequin (78) ou à l'adaptateur de vilebrequin (90) et à l'agencement de disque d'embrayage (74).

15. Procédé de montage d'une unité d'entraînement selon la revendication 14,
**caractérisé en ce**
**qu'**après la fixation de l'unité prémontée sur le moteur à combustion interne (12), une distance axiale de l'agencement de disque d'embrayage (74) à l'interface de montage du vilebrequin (78) ou de l'adaptateur de vilebrequin (90) est déterminée, et le moyeu d'embrayage (84) avec le vilebrequin (78) ou avec l'adaptateur de vilebrequin (90) est connecté à l'agencement de disque d'embrayage (74) en intercalant un disque d'espacement (94) sélectionné sur la base de la distance axiale susmentionnée.
